# EUROPÄISCHE PATENTSCHRIFT

(11) **EP 1 561 660 B1**
(45) Veröffentlichungstag und Bekanntmachung des Hinweises auf die Patenterteilung: **28.02.2007**
(21) Anmeldenummer: 04026403.8
(22) Anmeldetag: 06.11.2004
(51) Int. Cl.: B60S 9/08

(54) **Höhenverstellbare Stütze für Sattelauflieger oder dergleichen**
Support, adjustable in height, for semi-trailer or similar
Support, réglable en hauteur, pour semi-remorque ou similaire

(30) Priorität: 05.02.2004 DE 202004001707 U
(43) Veröffentlichungstag der Anmeldung: 10.08.2005
(73) Patentinhaber: Georg Fischer Verkehrstechnik GmbH, 78221 Singen (DE)
(72) Erfinder: Riedl, Reinhold, 63897 Miltenberg (DE)
(74) Vertreter: Weiss, Wolfgang

(56) Entgegenhaltungen:
- DE-U1- 20 305 175
- DE-U1- 20 307 381
- US-A- 3 632 086

## Beschreibung

Die Erfindung bezieht sich auf eine höhenverstellbare Stütze für Sattelauflieger oder dergleichen gemäß dem Oberbegriff des Anspruchs 1.

Derartige Stützen sind, in meist paarweiser Anordnung, am vorderen Bereich des Sattelaufliegers angeordnet.

Eine gattungsgemäße Stütze ist aus der DE 203 07 381 U1 bekannt. Dabei ist die Handantriebswelle hinter dem Handantriebsritzel in einem Lager, das im Mittelbereich des Stützenaußenrohres angeordnet ist und einem Lager in dessen Vorderwand abgelagert. Und nur im Einsatzfall des Handantriebs ist die Handantriebswelle, nach axialer Verschiebung, zusätzlich über einen stirnseitigen Lagerzapfen vor dem Handantriebsritzel in der Rückwand des Stützenaußenrohres gelagert. Das mittlere Lager bedingt einen gewissen baulichen Aufwand.

DE 20 2004 001 054.2 betrifft eine Stütze bei der das Ritzel der Handantriebswelle nur fliegend gelagert ist, was auch beim Einsatz des Handantriebs gilt. Dabei ist ebenfalls ein relativ großer Bauaufwand für das Lager in Nähe der Mitte des Stützenaußenrohres erforderlich, zumal eine benachbarte Motoranordnung die Gestaltung und Befestigung des Lagers erschwert.

In der US 3,632,086 ist eine Abstützvorrichtung für Fahrzeuge, insbesondere Sattelauflieger beschrieben, bestehend aus zwei miteinander über eine Welle gekuppelten Winden, von denen eine mit einem schaltbaren Untersetzungsgetriebe für den Antrieb der Vorrichtung versehen ist, wobei die Antriebswelle des Untersetzungsgetriebes in der hohlen Kupplungswelle zur anderen Winde weitergeführt und als Schaltwelle des Untersetzungsgetriebes in der hohlen Kupplungswelle des Windenpaares axial verschiebbar gelagert ist.

Der Erfindung liegt die Aufgabe zugrunde, eine Stütze für Sattelauflieger mit einer einfacheren Lagerung der Antriebswelle zu schaffen, die konstruktiv und kostenmäßig optimal ist.

Es wird vorgeschlagen, die Antriebswelle zumindest in ihrem vorderen Endbereich, d.h. in dem Endbereich, der sich im Stützenaußenrohr befindet, konzentrisch hohl zu gestalten und auf einem feststehenden zylindrischen Lagerungszapfen, der innen an der Rückwand des Stützenaußenrohres sitzt, zu lagern. Eine zweite Lagerung kann in einem Lagerkörper, der in der Vorderwand des Stützenaußenrohres sitzt erfolgen.

Wenn die Antriebswelle im genannten Endbereich außen mit einer Verzahnung versehen wird kann darüber das Antriebsmoment auf ein parallel und vorzugsweise darunter angeordnetes Zahnrad übertragen werden.

Wird der konzentrische hohle Bereich der Antriebswelle durch eine Lagerbohrung gebildet, die etwa doppelt so tief wie die Zahnbreite der Verzahnung ist und wenn auch die Länge des Lagerungszapfens entsprechend diesem Maße ausgeführt wird, entsteht erfindungsgemäß eine sehr vorteilhafte und kostengünstige Lagerung. Im Antriebsfall, bei ganz eingeschobener Antriebswelle überdeckt diese nämlich die volle Länge des Lagerzapfens und die Radialkräfte die u. a bei der Abwälzung der Zahnräder entstehen, werden vom Lagerungszapfen sicher abgetragen. Im Nichtantriebsfall, bei dem die Antriebswelle axial um etwas mehr als die Zahnbreite nach außen verschoben ist, damit die Zahnräder außer Eingriff sind, bleibt die Lagerung dennoch erhalten, weil noch ausreichende Überdeckung von Antriebswelle und Lagerungszapfen vorhanden ist.

Anstatt einer stirnseitigen eingebrachten Lagerbohrung beschriebener Tiefe in der Antriebswelle kann vorteilhafter Weise auch ein hohles Ritzel, das z. B. auf einem stirnseitigen Zapfen der Antriebswelle geschäftet und mit dieser verbunden ist und dessen anderer Innenbereich zur Lagerung auf dem Lagerungszapfen dient, Verwendung finden.
Es kann auch vorteilhaft sein die ganze Antriebswelle aus einem Rohr herzustellen.

Ein anderer Gedanke ist, den Lagerkörper zur Lagerung der Antriebswelle in der Vorderwand des Stützenaußenrohres so zu gestalten, dass er von innen in das Stützenaußenrohr eingesetzt und angeflanscht werden kann und lediglich von außen zu verschrauben ist, was die Bauweise der Stütze kompakter macht.

Vorteilhafte Ausgestaltungen der Erfindung gehen aus den Unteransprüchen hervor.

Die Erfindung wird anschließend anhand der Zeichnungen erläutert. Es zeigen:
- Fig. 1: eine Frontansicht der erfindungsgemäßen Stütze,
- Fig. 2: eine Seitenansicht der in Fig. 1 gezeigten Stütze,
- Fig. 3: einen Querschnitt der Stütze entlang der Linie A-A in Fig. 1 mit der Antriebswelle in Funktionsstellung,
- Fig. 4: einen Querschnitt der Stütze entlang der Linie A-A in Fig. 1 mit der Antriebswellenstellung außer Funktion und
- Fig. 5: einen Querschnitt der Stütze entlang der Linie A-A entsprechend Fig. 3 in alternativer Ausgestaltung der Antriebswelle.

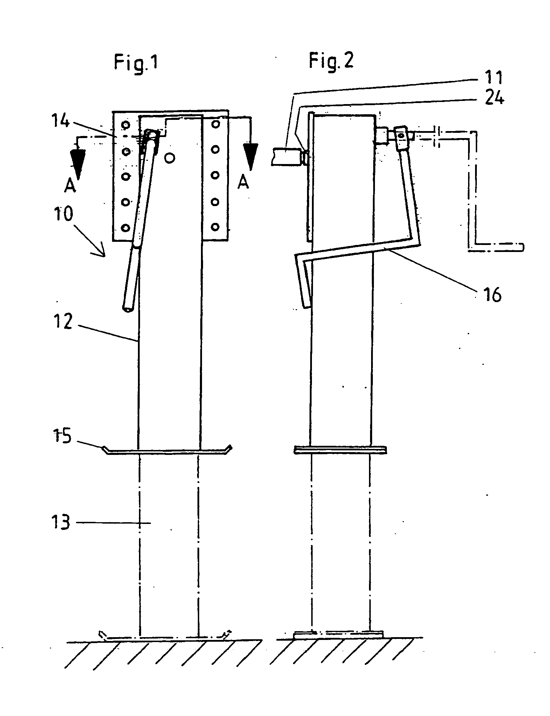

Die in Fig. 1 bis 5 gezeigte Stütze 10 wird paarweise am Chassis eines Sattelaufliegers in dessen vorderen Bereich befestigt und ist in Transportstellung eingefahren, d.h. in verkürztem Zustand. Bevor der Sattelauflieger vom Sattelschlepper abgekuppelt wird, werden die Stützen 10 ausgefahren.

Da die Stützen 10 eines jeden Paares im Aufbau annähernd gleich sind bzw. weil die meistens von einer ersten Stütze 10 aus über eine Verbindungswelle 11 mit angetriebene zweite sich hauptsächlich nur durch ein einfacheres Getriebe, mit lediglich einer Kegelradstufe, von der ersten unterscheidet, genügt es eine antriebseitige Stütze 10 zu beschreiben.

Die Stütze 10 weist ein Stützenaußenrohr 12 und ein darin längsverschiebbar gelagertes Innenrohr 13 auf.

Das Stützenaußenrohr 12 und das Stützeninnenrohr 13 besitzen einen quadratischen Querschnitt.

Die Stütze 10 wird mit einer auf ihrer Rückseite über eine am Stützenaußenrohr 12 sitzenden Anschraubplatte 14 am Sattelauflieger befestigt.

Am unteren Ende des Stützeninnenrohres 13 ist ein Fuß 15 zur Abstützung am Boden befestigt.

An der Vorderseite der Stütze 10 befindet sich eine wegschwenkbare Handkurbel 16 für den manuellen Antrieb.

Die Stütze 10 weist eine Spindel 17, die eine Mutter bewegt, an der das Stützeninnenrohr 13 befestigt ist, auf.

Der Spindeltrieb stützt sich über ein Axiallager gegen eine Lagerplatte 18 ab, die horizontal in das Stützenaußenrohr 12 eingeschweißt ist. Über der Lagerplatte 18 befindet sich auf einem Zapfen der Spindel 17 ein mit diesem verstiftetes Kegelrad 19.

Im Zentrum der Stütze 10 und oberhalb des Kegelrades 19 ist eine Getriebeausgangswelle 20 horizontal angeordnet, die in den Rohrwänden des Stützenaußenrohres 12 gelagert ist.

Auf der Getriebeausgangswelle 20 sitzen drehfest ein durchmesserkleineres Kegelrad 21 und ein Zahnrad 22.

Oberhalb der Getriebeausgangswelle 20, parallel zu dieser angeordnet und seitlich verlagert befindet sich ein Motor 23, dessen Antriebsritzel mit dem Zahnrad 22 kämmt.

Ebenfalls oberhalb der Getriebeausgangswelle 20, parallel zu dieser angeordnet und seitlich entgegengesetzt vom Motor 23 verlagert befindet sich für den Handantrieb eine Antriebswelle 24.

Die Antriebswelle 24 weist im inneren Endbereich eine Verdickung auf, die als Zahnrad 25 ausgebildet ist. Und im gleichen Endbereich besitzt die Antriebswelle 24 eine konzentrische Lagerbohrung 26, deren Tiefe etwa der doppelten Breite des Zahnrad 25 entspricht.

In die Lagerbohrung 26 ist eine Buchse 27 eingepresst.

An der Rückwand des Stützenaußenrohres 12 ist ein feststehender Lagerungszapfen 28 angebracht, der horizontal und axparallel zur Getriebeausgangswelle 20 in das Stützenaußenrohr 12 hineinragt.

Fluchtend zum Lagerungszapfen 28 befindet sich ein von innen in die Vorderwand des Stützenaußenrohres 12 eingesetzter Lagerkörper 29, der von außen mit dem Stützenaußenrohr 12 verschraubt ist.

Im Lagerkörper 29 befindet sich eine Bundbuchse 30, die innen zwei axial beabstandete halbrunde Radialnuten 31, 32 aufweist.

Die Antriebswelle 24 ist auf dem Lagerungszapfen 28 und im Lagerkörper 29 gelagert und kann zwecks Ein- und Ausschaltung des Handantriebs axial verschoben werden.

Der Schiebeweg der Antriebswelle 24 beträgt etwas mehr als die Zahnbreite ihres Zahnrades 25 und wird von einem auf der Antriebswelle 24 sitzenden Stellring 33 nach außen begrenzt.

Die Schaltstellungen der Antriebswelle 24 für einen Eingriff des Zahnrades 25 in das Zahnrad 22 oder deren Freischaltung werden durch Arretierung mittels zweier, in einer Querbohrung in der Antriebswelle 24 eingelagerten Kugeln 34, die durch eine Druckfeder 35 fallweise in die Radialnut 31 oder 32 gedrückt werden, bestimmt.

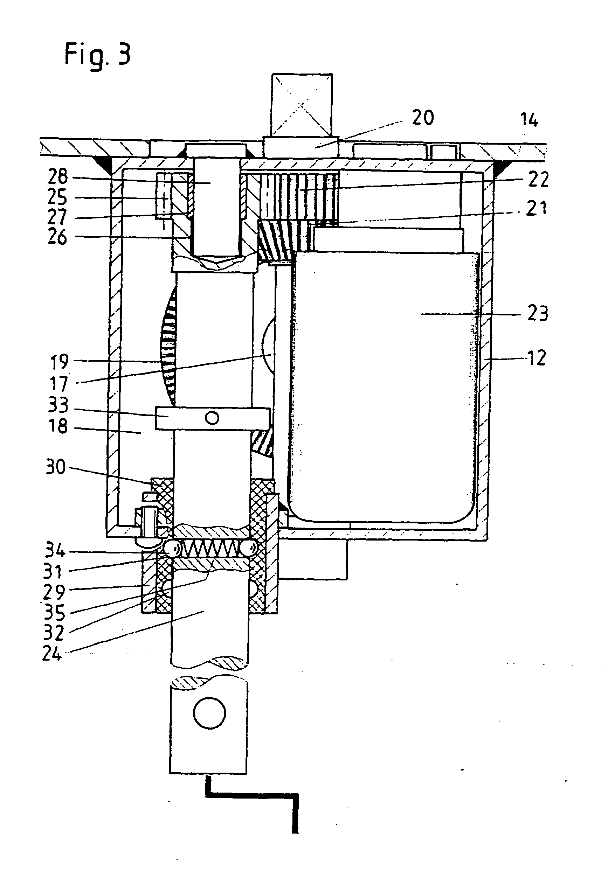

Fig. 3 zeigt die Antriebswelle 24 in der Schaltstellung bei der das Zahnrad 25 im Eingriff mit dem Zahnrad 22 ist und deren axiale Arretierung in der Radialnut 31 erfolgt.

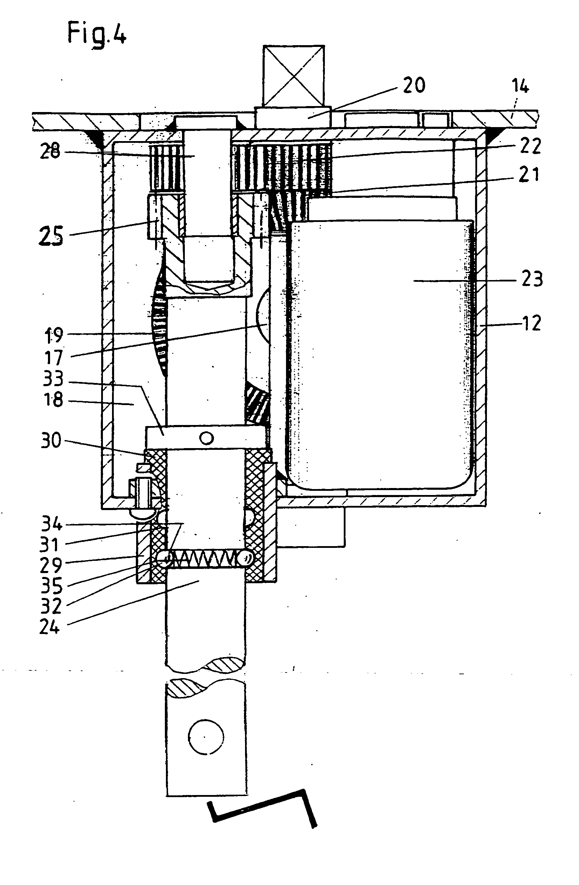

In Fig. 4 ist die Antriebswelle 24 in etwas herausgezogener Schaltstellung gezeigt, wobei die Zahnräder 25, 22 außer Eingriff sind und die entsprechende Arretierung in der Radialnut 32 erfolgt.

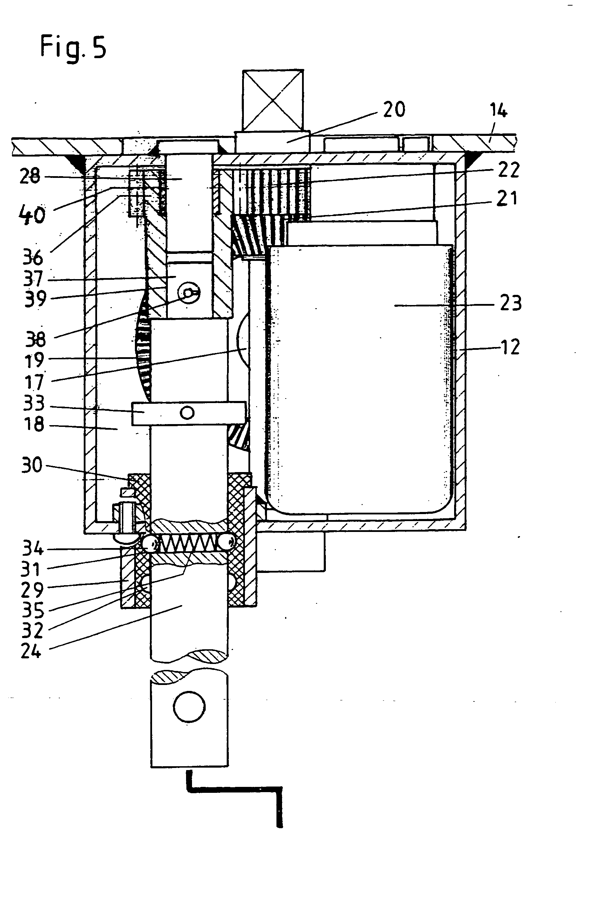

Gemäß Fig. 5 ist ein separates Zahnritzel 36 auf einen Stirnzapfen 37 der Antriebswelle 24 auf-/angesetzt und mit dieser mittels eines Spannstifts 38 verstiftet.

Das Zahnritzel 33 besitzt eine konzentrische Bohrung 39, in der eine Lagerbuchse 40 sitzt und ist auf dem Lagerungszapfen 28 abgelagert.

### Bezugszeichenliste

- 10: Stütze
- 11: Verbindungswelle
- 12: Stützenaußenrohr
- 13: Stützeninnenrohr
- 14: Anschraubplatte
- 15: Fuß
- 16: Handkurbel
- 17: Spindel
- 18: Lagerplatte
- 19: Kegelrad
- 20: Getriebeausgangswelle
- 21: Kegelrad
- 22: Zahnrad
- 23: Motor
- 24: Antriebswelle
- 25: Zahnrad
- 26: Lagerbohrung
- 27: Buchse
- 28: Lagerungszapfen
- 29: Lagerkörper
- 30: Bundbuchse
- 31: Radialnut
- 32: Radialnut
- 33: Stellring
- 34: Kugel
- 35: Druckfeder
- 36: Zahnritzel
- 37: Stirnzapfen
- 38: Spannstift
- 39: Bohrung
- 40: Lagerbuchse

## Patentansprüche

1. Höhenverstellbare Stütze für Sattelauflieger oder dergleichen mit einem ortsfest angebrachten Stützenaußenrohr, einem darin längsverschiebbar angeordneten Stützeninnenrohr und einer Getriebeausgangswelle auf der ein durchmesserkleineres Kegelrad drehfest sitzt, das zu einer Kegelradgetriebestufe gehört, die den Spindeltrieb zwecks Verschiebung des Stützeninnenrohres antreibt, wobei die Antriebswelle (24) zumindest in ihrem, der Antriebseite entgegengesetzten Endbereich hohl ist und einen daran angebrachten Fortsatz aufweist der hohl ist und der hohle Bereich eine konzentrische Lagerbohrung (26) ist, **dadurch gekennzeichnet dass** an der Rückseite des Stützenaußenrohres (12) ein nach innen weisender Lagerungszapfen (28) vorhanden ist, auf dem die Antriebswelle (24) mit ihrer Lagerbohrung (26) gelagert ist und axial verschiebbar oder axial festgelegt sein kann.

2. Stütze nach Anspruch 1, **dadurch gekennzeichnet, dass** der Fortsatz ein drehfest an der Antriebswelle (24) sitzendes Zahnrad (25) bzw. ein Ritzel ist.

3. Stütze nach Anspruch 1, **dadurch gekennzeichnet, dass** ein Zahnrad (25) bzw. Ritzel auf dem Lagerungszapfen (28) lagert.

4. Stütze nach Anspruch 1, **dadurch gekennzeichnet, dass** ein Lagerkörper (29) von innen in die Vorderwand des Stützenaußenrohres (12) eingesetzt und angeflanscht und von außen angeschraubt ist.

5. Stütze nach Anspruch 1 und 4, **dadurch gekennzeichnet, dass** der Lagerkörper .(29) hauptsächlich oberhalb und unterhalb der Antriebs welle (24) abstehende Flanschbereiche zur Befestigung aufweist.

6. Stütze nach Anspruch 1, **dadurch gekennzeichnet, dass** die Antriebswelle (24) als Rohr ausgebildet ist.

## Claims

1. Support, adjustable in height, for semitrailers or the like, with an outer support tube fitted in a fixed position, an inner support tube arranged in a longitudinally displaceable manner therein, and a transmission output shaft, on which a bevel gear of smaller diameter sits in a rotationally fixed manner, which bevel gear belongs to a bevel gear transmission stage which drives the spindle drive for the purpose of displacing the inner support tube, wherein the drive shaft (24) is hollow at least in its end region opposite the drive side, and has an extension which is attached to the said end region and is hollow, and the hollow region is a concentric bearing bore (26), **characterized in that** on the rear side of the outer support tube (12) there is an inwardly pointing mounting pin (28) on which the drive shaft (24) is mounted by means of its bearing bore (26) and can be fixed in an axially displaceable manner or fixed axially.

2. Support according to Claim 1, **characterized in that** the extension is a gearwheel (25) or a pinion sitting in a rotationally fixed manner on the drive shaft (24).

3. Support according to Claim 1, **characterized in that** a gearwheel (25) or pinion is mounted on the mounting pin (28).

4. Support according to Claim 1, **characterized in that** a bearing body (29) is inserted from the inside into the front wall of the outer support tube (12) and flange-mounted and is screwed to it from the outside.

5. Support according to Claims 1 and 4, **characterized in that** the bearing body (29) has flange regions for the fastening that primarily protrude above and below the drive shaft (24).

6. Support according to Claim 1, **characterized in that** the drive shaft (24) is designed as a tube.

## Revendications

1. Béquille réglable en hauteur pour des semi-remorques ou des engins similaires, avec un tube de béquille extérieur monté de manière fixe, un tube de béquille intérieur disposé dans celui-ci de manière mobile longitudinalement et un arbre de sortie d'engrenage sur lequel est monté, de manière fixe en rotation, une roue conique d'un diamètre plus petit appartenant à un étage d'engrenages coniques actionnant la commande de la vis pour déplacer le tube de béquille intérieur, l'arbre d'actionnement (24) étant creux au moins dans sa zone d'extrémité opposée au côté d'actionnement et présentant un prolongement, qui est creux, fixé à celui-ci, et la partie creuse étant un alésage de palier concentrique (26), **caractérisée en ce qu'**un tourillon palier (28) dirigé vers l'intérieur, sur lequel l'arbre d'actionnement (24) est en appui au moyen de son alésage de palier (26) et peut être déplacé axialement ou être immobilisé axialement, est disposé sur le côté arrière du tube de béquille extérieur (12).

2. Béquille selon la revendication 1, **caractérisée en ce que** le prolongement est une roue dentée (25) ou un pignon monté fixe en rotation sur l'arbre d'actionnement (24).

3. Béquille, selon la revendication 1, **caractérisée en ce qu'**une roue dentée (25) ou un pignon est en appui sur le tourillon palier (28).

4. Béquille selon la revendication 1, **caractérisée en ce qu'**un corps de palier (29) est mis en place et bridé par l'intérieur dans la paroi avant du tube extérieur de la béquille (12) et est vissé depuis l'extérieur.

5. Béquille selon les revendications 1 et 4, **caractérisée en ce que** le corps de palier (29) présente principalement au-dessus et au-dessous de l'arbre d'actionnement (24) des zones de bridage dépassantes pour la fixation.

6. Béquille selon la revendication 1, **caractérisée en ce que** l'arbre d'actionnement (24) est réalisé sous la forme d'un tube.
